# EUROPEAN PATENT APPLICATION

(11) **EP 4 749 490 A1**
(43) Date of publication of application: **27.05.2026**
(21) Application number: 24214930.0
(22) Date of filing: 22.11.2024
(51) Int. Cl.: G06F 21/36, G06V 20/20, H04L 9/40

(54) **SYSTEM AND METHOD FOR ENHANCED SECURITY USING SPACE RECOGNITION FOR PUSH APPROVALS**

(71) Applicant: THALES DIS CPL CANADA, INC., Ottawa QC K2E 7M6 (CA)
(72) Inventor: STEAU, Ioana, GATINEAU J8P 5H5 (CA); PU, Xiao, OTTAWA K2J 0P5 (CA); CHAUDHRY, Omar, MARKHAM L3S 3X1 (CA)
(74) Representative: Grevin, Emmanuel

(57) **Abstract**

Systems and methods for enhanced security using space recognition for push approvals on a client device use one or more processors which perform certain operations. The operations can include capturing a real-time environment and creating a spatial map using a camera, comparing the spatial map with a pre-stored device bound image database and proceeding with a push authentication based upon a match between the spatial map captured and information from the pre-stored device bound image database. In some embodiments, the system prevents the push authentication when a lack of a match between the spatial map captured and the information from the pre-stored device bound database exists. In some embodiments, the one or more processors further perform the operation of receiving a push notification after initiating capturing the real-time environment and creating the spatial map.

## Description

### TECHNICAL FIELD

The present embodiments relate generally to systems and methods of push authentication. More particularly, the system and method relate to push authentication systems that recognize spatial contexts using, for example, Augmented Reality or Virtual Reality image recognition.

### BACKGROUND

In many systems, Push authentication methods utilize biometrics or other techniques to allow user to log in without entering a password. Generally, push authentication uses a two-factor authentication (2FA) method that uses mobile apps or notifications to allow users to log in without entering the password or PIN. Such methods include the use of push notifications from the Duo Mobile app for one-tap authentication or other authenticator apps. SAP Customer Data Cloud allows customers to authenticate using their mobile phones by confirming a push notification. Other authentication methods include biometrics using fingerprint recognition or face recognition, use of SMS or short messaging service, or a physical toke associated with a device to authenticate a login. In some instances, QR codes are used when a QR scanning option is available to users.

US Patent No. 1 0,754,939 granted on August 25, 2020 to International Business Machines Corporation discloses a method for authentication based on image location and image analysis, identifying in an image a set of objects corresponding to a plurality of user selections made by the user with reference to the image when the image is presented on the display and performing a match between the set of objects and a predefined set of objects in the three-dimensional model using the three-dimensional model and the view point, and authenticating the request based on an outcome of the match.

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

In some embodiments, the systems and methods for enhanced security using space recognition for push approvals on a client device use one or more processors (804) and memory (802) operatively coupled to the one or more processors which perform certain operations.

The operations can include capturing a real-time environment and creating a spatial map using a camera coupled to the one or more processors, comparing the spatial map with a pre-stored device bound image database, and proceeding with a push authentication based upon a match between the spatial map captured and information from the pre-stored device bound image database. In some embodiments, the method prevents the push authentication when a lack of a match between the spatial map captured and the information from the pre-stored device bound image database exists.

In some embodiments, the one or more processors further performs the operation of receiving a push notification after initiating capturing the real-time environment and creating the spatial map.

In some embodiments, the real-time environment and the spatial map are created using an augmented reality (AR) session or a virtual reality (VR) session.

In some embodiments, the real-time environment and the spatial map are created using an augmented reality (AR) session that detects key features of specific images within a user environment using AR anchors and AR anchor-based tracking.

In some embodiments, the one or more processors are further configured to pre-store the pre-stored device bound image database or spatial maps representing pre-defined environments.

In some embodiments, the system comprises an authentication application installed on the client device where the authentication application receives a push notification and a user has an option to approve via space verification. In some embodiments, the authentication application in response to receipt of a user approval of a push opens a camera view enabling the user to capture the real-time environment to verify information in the pre-stored device bound image database or spatial maps. In some embodiments, once the real-time environment is verified, the user is approved for login or the user continues an authentication flow specified by an application policy.

In some embodiments, the one or more processors further performs the operation of authenticating using biometrics of a user or requesting a Personal Identity Number (PIN) of the user before using space recognition for push approvals. In essence, the method herein adds another layer of security or provides a gating function before using additional methods of authentication or verification.

In some embodiments, a processor-implemented method for enhanced security using space recognition for push approvals on a client device includes receiving a push notification at the client device, in response to an acceptance of the push notification, capturing a real-time environment and creating a spatial map using a camera coupled to the one or more processors, comparing the spatial map with a pre-stored device bound image database, proceeding with a push authentication based upon a match between the spatial map captured and information from the pre-stored device bound image database; and preventing the push authentication with a lack of a match between the spatial map captured and the information from the pre-stored device bound image database.

In some embodiments, the match between the spatial map and the pre-stored device bound image database enables a user for login. In some embodiments, the real-time environment and the spatial map are created using an augmented reality (AR) session that detects key features of specific images within a user environment using AR anchors and AR anchor-based tracking that uses one or more of an anchor for a 2D surface that is detected in an AR space, an anchor for a 3D object that is detected in the AR space, and an anchor for a known image detected in the AR space.

In some embodiments, the method further includes a coaching overlay (such as an Apple defined coaching overlay) that guides a user in moving the client device during the step of capturing the real-time environment and creating the spatial map.

In some embodiments, the one or more processors further performs the operation of authenticating based on an application policy for a user before using space recognition for push approvals. In some embodiments, the application policy includes using biometrics or PINs or both.

In some embodiments, the method or system can be implemented as a non-transitory computer-readable medium encoded with instructions for causing a processing system to execute steps for enhanced security using space recognition for push approvals on a client device that includes some or all of the aforementioned steps and not necessarily in the order recited.

### BRIEF DESCRIPTION OF THE DRAWINGS

The accompanying drawings, which are incorporated in and constitute a part of this description, illustrate embodiments consistent with the embodiments and, together with the description, serve to explain the principles of the embodiments.
**FIG. 1** illustrates a flow diagram of a system for enhanced security using space recognition for push approvals on a client device in accordance with the embodiments;
**FIG. 2** illustrates another flow diagram of a system for enhanced security using space recognition for push approvals on a client device in accordance with the embodiments;
**FIGs. 3A, 3B, and 3C** illustrate screenshots of a user interfaces in an app for enabling Augmented Reality (AR) space authentication in accordance with the embodiments;
**FIG. 4A** illustrates a screenshot of a user interface capturing a real-time environment in accordance with the embodiments;
**FIG. 4B** illustrates a screenshot of a user interface providing notice of successfully adding an AR space in accordance with the embodiments;
**FIG. 4C** illustrates a screenshot of a user interface illustrating an AR space in an AR space list in accordance with the embodiments;
**FIG.5A** illustrates a screenshot of a user interface for using AR space and code selection as part of a log in authentication process in accordance with the embodiments;
**FIG.5B** illustrates another screenshot of a user interface for using AR space and code selection as part of a log in authentication process in accordance with the embodiments;
**FIG.5C** illustrates another screenshot of a user interface for using AR space and code selection as part of a log in authentication process after entry of a correct code in accordance with the embodiments;
**FIG.6A** illustrates yet another screenshot of a user interface providing an overlay for guiding a user to capture a real-time AR space for comparison as part of a log in authentication process in accordance with the embodiments;
**FIG.6B** illustrates a screenshot of a user interface the capture the real-time AR space for comparison as part of a log in authentication process in accordance with the embodiments;
**FIG.6C** illustrates a screenshot of a user interface providing notice of successfully recognizing or matching a real-time AR space with a stored AR space as part of a log in authentication process in accordance with the embodiments;
**FIG.7A** illustrates a screenshot of a user interface requesting PIN authentication after a capture of a real-time AR space for comparison as part of a log in authentication process in accordance with the embodiments;
**FIG.7B** illustrates a screenshot of a user interface providing notice of successfully entering a PIN and approving a push after recognizing or matching a real-time AR space with a stored AR space as part of a log in authentication process in accordance with the embodiments;

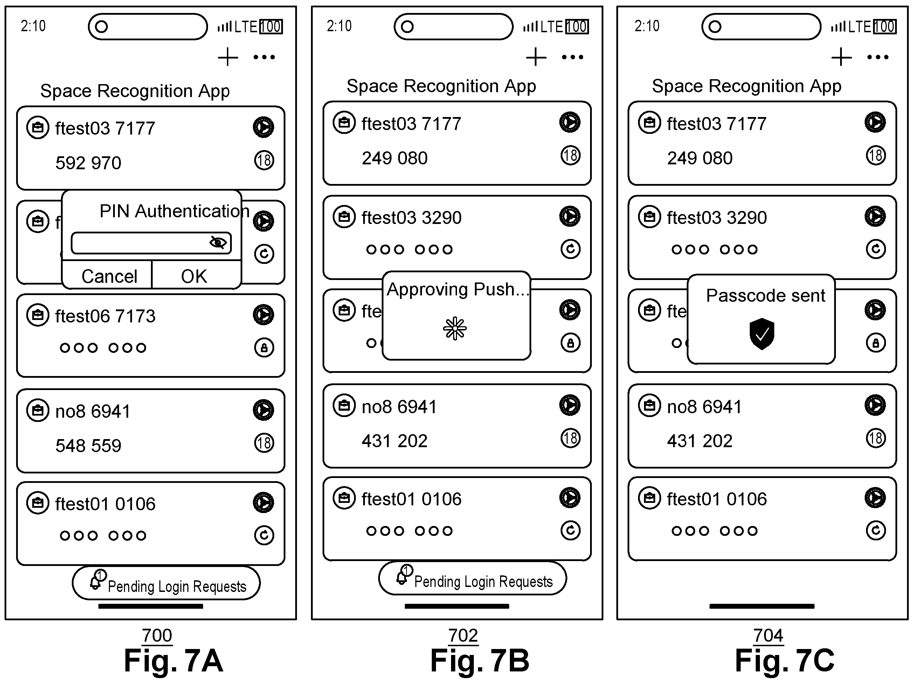

**FIG.7B** illustrates a screenshot of a user interface providing notice of successfully entering a PIN and approving a push after recognizing or matching a real-time AR space with a stored AR space as part of a log in authentication process in accordance with the embodiments;
**FIG. 7C** illustrates a screenshot of a user interface providing notice of the sending of a passcode after both successfully entering a correct PIN and recognizing or matching a real-time AR space in accordance with the embodiments; and

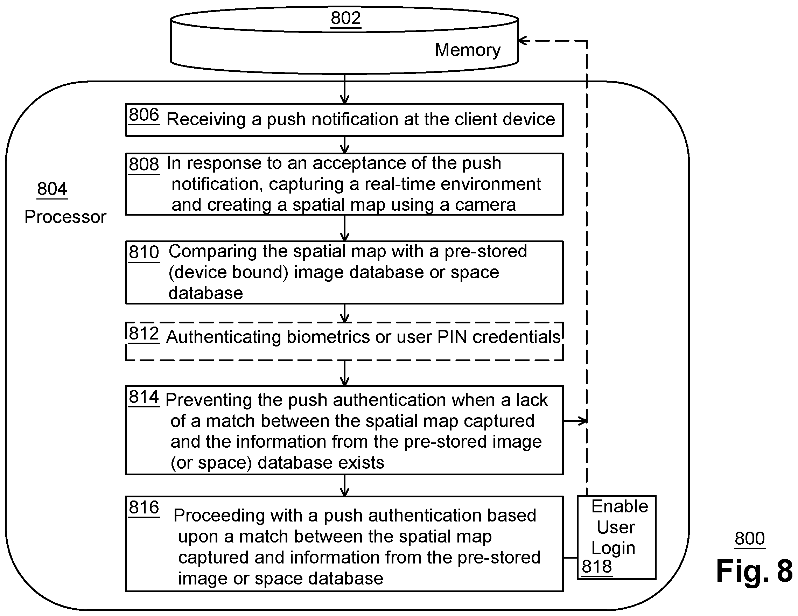

**FIG. 8** illustrates a flowchart and hardware used in a method for using AR space as part of a log in authentication process in accordance with the embodiments.

Specific embodiments have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments. Instead, they are merely examples of systems, apparatuses and methods consistent with aspects related to the embodiments as recited in the appended claims.

Traditional methods for push authentication typically depend on biometric data or PIN codes. However, with the rise of Augmented Reality and the introduction of devices like Vision Pro, these approaches, except for optic authentication, are becoming outdated as they fail to account for the user spatial context. In situations where the verification of the physical environment is crucial for authentication, such as accessing secure office locations or manufacturing facilities, there's a growing need for a system that can authenticate. The AR/VR-based solution for push authentication complements or can replace traditional biometric methods by ensuring that the user is in the correct place. Note that "physical environment" or "physical location" in the context of this application refers to the "space" that the app user is physically located in. Accordingly, physical environment or physical location should be understood as the user space.

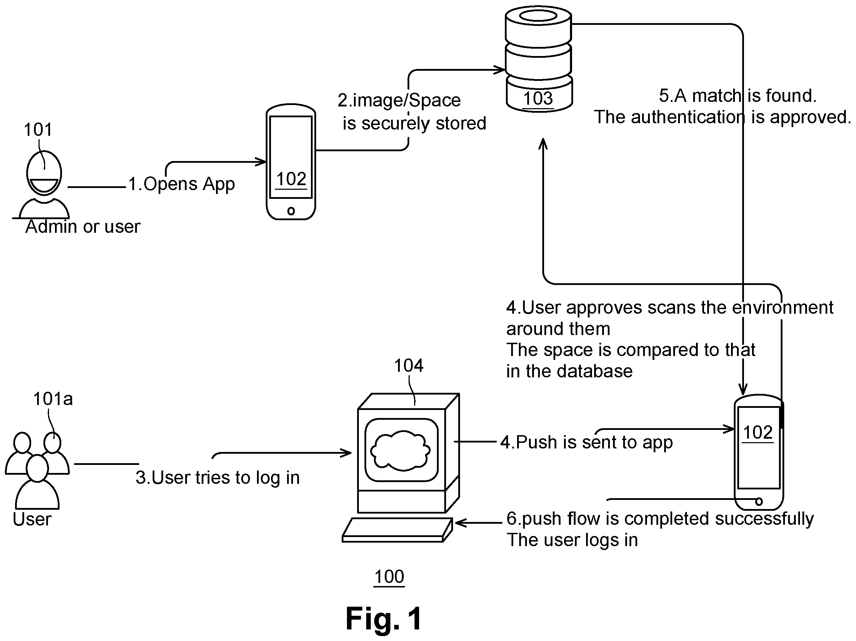

Referring to FIG. 1, a high-level flow chart and architecture illustrates a system 100 that initially has an administrator or a user 101 opening (at Step 1) an authentication app on a client device 102 such as a mobile phone and where the app enables the user to capture and securely store (at Step 2) a real-time AR or VR space in a memory or database 103. In some embodiments, the memory or database can be local to the mobile device 102. Once the data associated with the real-time AR or VR space is "pre-stored", the user 101a (which can be the user 101) attempt to log in at Step 3 on a device or client device 104. In response to the log in attempt, a push notice is sent to the app on the mobile device 102 at step 4. The push notice also allows the user to approve and scan a real-time environment around them, where the space is compared to the pre-stored space that is in the memory or phone or mobile device database 103. At step 5, if a match is found, the authentication is approved and the push flow is completed successfully at step 6 resulting in the user logging in.

In some embodiments, AR space (or VR) verification enhances security measures on iOS 14+ devices or other mobile devices using Augmented Reality (AR) image recognition (or VR image recognition). With the exclusion of user location data and PIN verification from the authentication flow, space verification can provide a reliable method for the approval of authenticator pushes, while also prioritizing user privacy. However, AR or VR space verification can also complement and further secure existing methods using PIN verification or other methods of verification as well.

With the release of Apple's Vision Pro AR googles, it is evident that Apple is moving towards a realm of a more real-world integration of apps. Apps that can be moved anywhere, scaled and interacted within the user's current environment. The embodiments herein take advantage of this functionality by allowing users to use space recognition for push approvals.

Furthermore, ARKit is one of the frameworks extended for Vision Pro implementation. ARKit is an application programming interface (API) for iOS, iPadOS and VisionOS which lets third-party developers build augmented reality apps, taking advantage of a device's camera, CPU, GPU, and motion sensors. The embodiments herein can take advantage of permission verification through the use of ARKit and Image anchoring. Other OS systems (Android, etc.) can have comparable capabilities and the embodiments herein can be adapted accordingly without deviating from the scope and breath of the claims.

The embodiments herein can integrate the AR/VR Space Verification in a push authentication/ process. The system has a list of images or spatial data that can be pre-stored on the device and the captured data is matched to the expected environment in real-time. If the stored data and the physical data match, push authentication succeeds in a manner that is more seamless in light of the use of AR and VR technologies.

The embodiments enhance push authentication without relying on traditional GPS locations while keeping up with technological advancements. AR/VR technology can supplant or complement methods of authentication using pins and/or location. In other words, AR space verification offers an additional layer of security beyond the current authentication methods such as pins and biometrics. It ensures that only the authorized user can authenticate within the app by verifying their identity through scanning a specific physical space. Users can easily store reference images and authenticate themselves by scanning the designated AR or VR space while minimizing the risk of unauthorized access by analysing the spatial data captured by the camera and comparing it with the reference images to verify the authenticity of the environment. The embodiments allow users to authenticate based on physical space location or user space, without the need for requesting authorization to use location services. In some embodiments, employers can provide pre-defined images to allow employees to only authenticate using the designated spaces.

Utilizing ARkit as part of the Apple Framework, for example, brings Augmented Reality experiences to iOS devices. It allows developers, to create apps that blend and/or detect virtual elements within the real world. Within ARKit, there are many different capabilities including image recognition, face recognition, environment tracking and many others.

ARKit has an advanced tracking capability which is possible through the use of the device's camera and sensors. These are able to track the position and orientation of the device in real-time. Using this tracking mechanism, the embodiments herein are able to place and anchor virtual objects in the real world. ARKit also provides developers with image detection capabilities, allowing developers to detect and track real-world images in the environment.

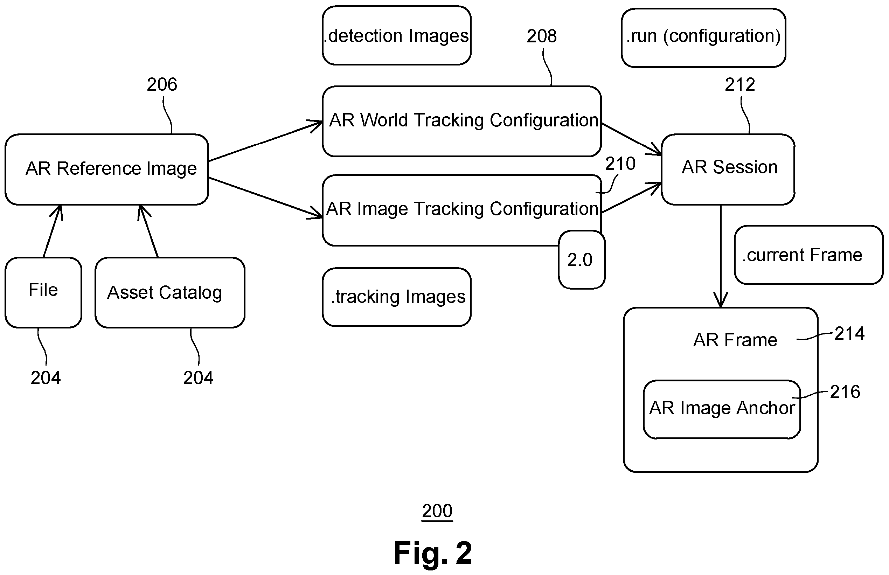

With respect to image recognition and referring to the system flow 200 of FIG. 2, ARKit has the ability to recognize and track specific images within the user environment. Keep in mind that the ARKit shown is an Apple iOS-specific system and that other OS designs or configurations may vary from the components shown accordingly. The system can allow a user or administrator to create a library of reference images that ARKit will use to match against the live camera AR view. The image designated as ARReferencelmage 206 can come from a file 202 or asset catalog 204 for example. In some embodiments, Image detection can be implemented using ARkit's configuration of ARWorldTrackingConfiguration 208 or ARImageTrackingConfiguration 210 which can run during a session, more specifically here during an ARSession 212. In some embodiments, the process compares an AR image anchor (within an AR frame) or more specifically an ARImageAnchor 216 (within an ARFrame 214) to determine a match between a live space and a stored space. When an image is detected, you can see the exact physical space location (not to be confused with geographical location).

Before diving into the image recognition, a better understanding of ARAnchors would be beneficial. World-tracking sessions in some of the embodiments would include the following:
ARPlaneAnchor - anchor for a 2D surface that is detected in the AR space such as a floor, a table etc.
ARObjectAnchor - anchor for a 3D object that is detected in the AR Space such as tracking an object's position and/or orientation and allows for things such as interacting with those objects.
ARImageAnchor - anchor for a known image detected in the AR Space

Image recognition within the AR space typically involves the use of ARAnchors and ARAnchor-based tracking, and in this case ARImageAnchor. The simplified version of how the ARImageAnchor works to detect images is as follows in one example, to create an image reference.

An ARKit session (212) is created to enable image tracking with a specific configuration, ARWorldTrackingConfiguration (208), and a list of detected images. It basically lets the system know which images it should be detecting when a session is running. This session can be paused and reset.

When the Image Recognition is in process, the device camera is moving in the AR space. It is continuously analyzing and capturing the camera frames to search for matches with the images set in the session configuration.

Once the image is recognized or a match is found between the captured AR space image and a reference image,, the system is able to get information about the anchor including the position, orientation, and the scale of the detected image within the AR Space.

Once the image is detected and there is a valid ARAnchor, overlays can be added such as virtual objects etc. to those precise locations of the recognized image.

This can be done with the addition of a SCNNode child onto a detected anchor node.

In some embodiments, each image in the device-bound library is associated with AR anchors. These are specific, recognizable points or patterns within an image. Anchors act as fixed reference points that enable accurate positioning and alignment in a physical space. Apple's approach, such as with devices like the Vision Pro, uses image tracking to identify known images in a user's environment, anchoring digital content to these points to create a seamless AR experience.

After the user has received a push notification, in some embodiments, AR Anchors can follow a particular authentication process that might include image scanning, anchor scanning, and an authentication decision.

With respect to Image Scanning, the app can use the device's camera to scan the environment during a spatial recognition step. It's looking for specific anchors in the space:

In this regard, the system is seeking features within physical surroundings that correspond to those in the pre-stored images in the device-bound library.

With respect to Anchor Matching, the app can compare the anchors it detects in the physical space to the anchors within each reference image. This is not just looking for the image as a whole, but identifying distinct points, edges, or patterns within each image that serve as "anchors." This way, even if the image is viewed from a different angle, the app can still recognize it based on these defined points. In context of Apple devices, it can use the native iOS ARImageAnchor.

With respect to an Authentication Decision for authenticating the user, all anchors in the environment must precisely match those within the stored reference images. If every anchor matches, the system confirms that the user is in the correct, verified location and grants access. If there's any discrepancy, access is denied and the push is NOT approved.

Further note that minor changes don't impact recognition. Since anchors are specific to the key points in each image, minor changes in the environment, like adding a small object (such as a plant), won't interfere with recognition. This is because these minor changes don't alter the critical anchor points that the app relies on to verify the environment.

This anchor-based reference image approach from Apple allows for highly secure, location-dependent authentication, ensuring that only someone in the correct physical space with matching anchors can gain access. By matching images through these detailed points, the system combines visual recognition with spatial accuracy. Adding this device bound reference image spatial verification onto the push authentication allows for a more robust and, most importantly, secure authentication experience.

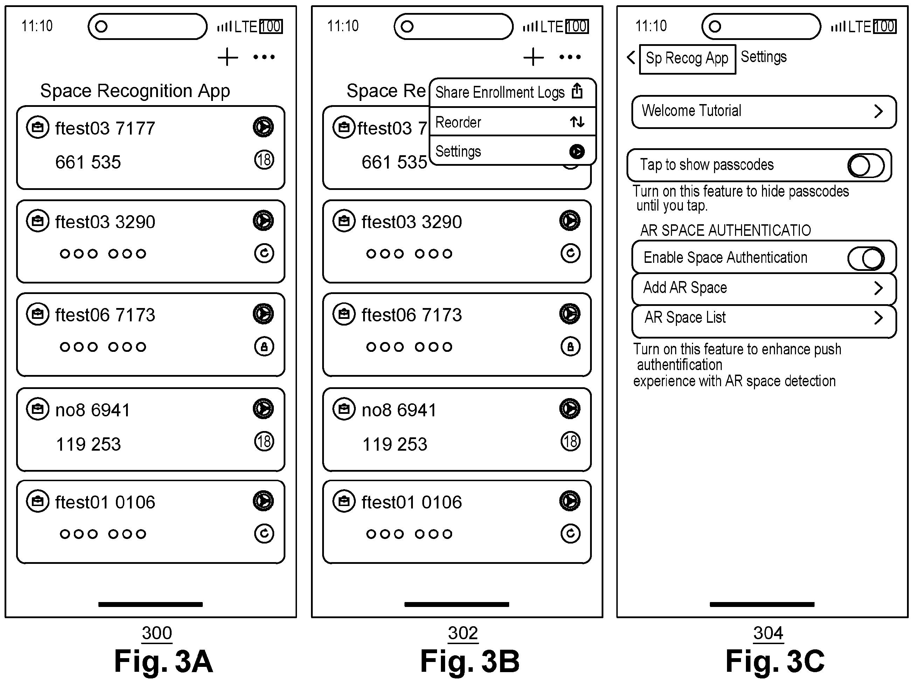

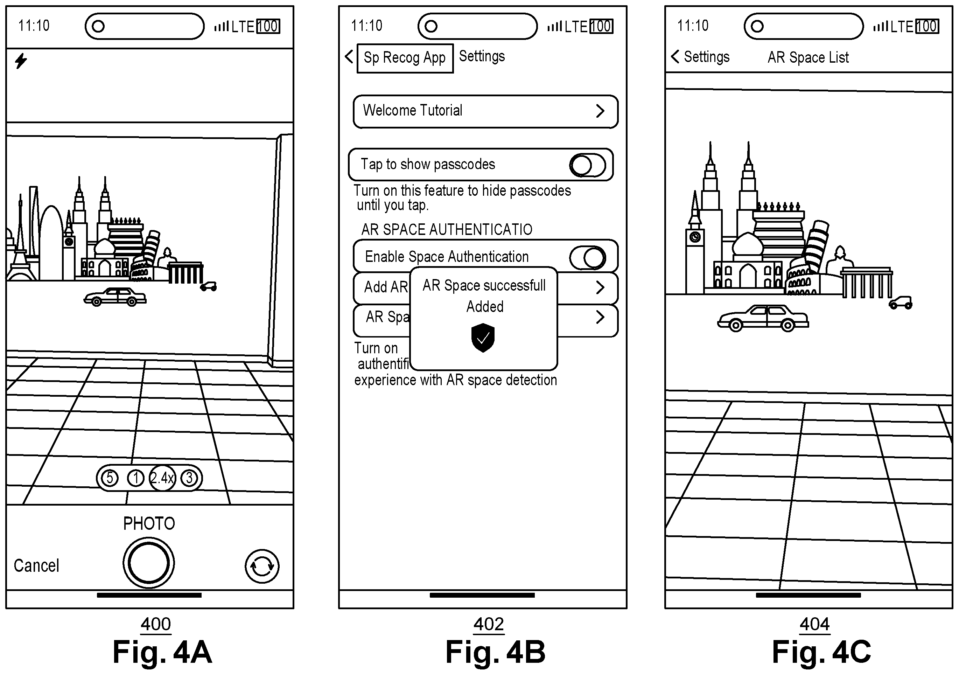

There are certain pre-conditions for the system to operate properly. With references to FIGs. 3A, 3B, 3C, 4A, 4B, and 4C, such pre-conditions can be clearly seen. Obviously, the authentication app would need to be installed on the mobile device where the authentication app is configured to send push requests to verify a user's identity and allow them to approve a log in.

Initially, the user or administrator would open the authenticator app as shown in user interface 300 of FIG. 3A. The user or administrator would go to settings as shown in user interface 302 of FIG. 3B and then the user or administrator would enable space authentication as shown in user interface 304 of FIG. 3C. This allows the user to go to the push environments list or allows the user to add new environments such as office spaces or other spaces that would be an acceptable workspace for example. The app would also allow the user or administrator to maintain the push environments list.

With further reference to FIG. 4A, the user or administrator can capture a real time image (AR or VR) 400 for storage in the push environments list. FIG. 4B and user interface 402 would provide notice that the newly added AR space was added to the push environments list. User interface 404 would further show and allow the user or administrator to view the various pre-stored AR space list or push environments list.

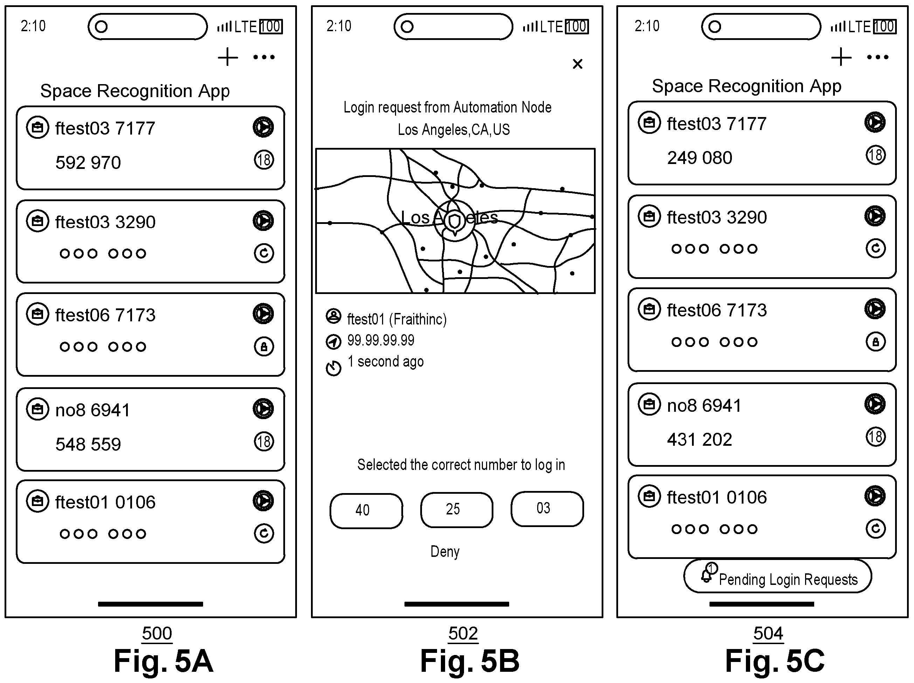

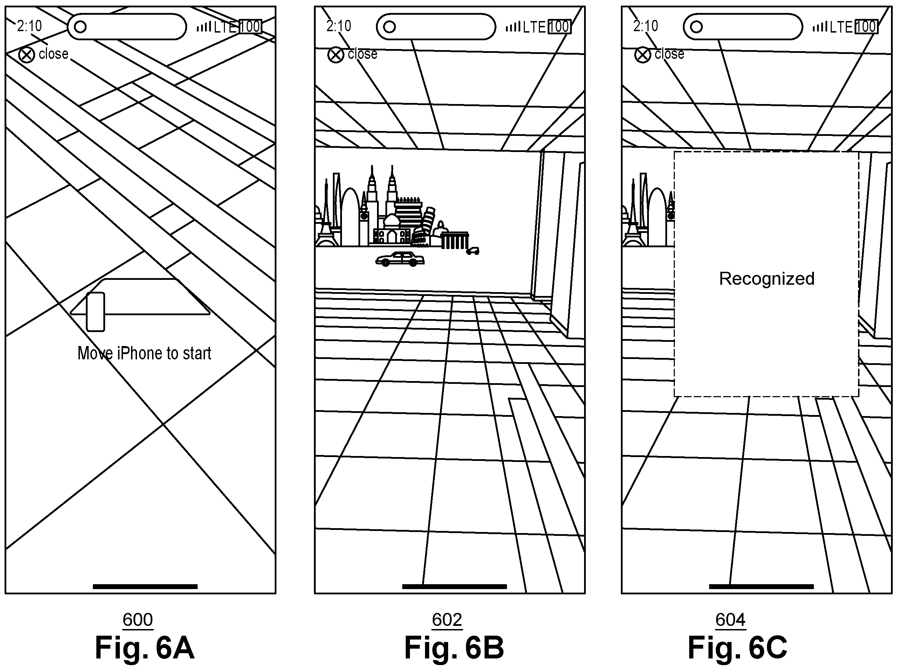

FIGs. 5A, 5B, 5C, 6A, 6B, and 6C further illustrates how the user can use the app to securely log in. User interface 500 of FIG. 5A can be one of the initial screens when the user opens the app to attempt a log in. User interface 502 of FIG. 5B can further illustrate that the app may require the selection of a number to log in when the user approves the log in or push attempt in the app. Even if the user has and selects the correct number, the system will further require the AR or VR verification and thus user interface 504 of FIG. 5C will show the message "Pending Login Requests".

At this juncture, the app opens the camera view as illustrated in user interface 600 of FIG. 6A. The user can move the camera around in the environment to verify it is the same as the pre-defined environments that are pre-stored in the steps above. In some embodiments, the system can include a coaching overlay that guides the user in how to move their camera or phone to best orient and capture the real-time space for the best chances to obtain a match. In some embodiments, the system may automatically capture the environment or real-time space without further activation from the user. User interface 602 of FIG. 6B illustrates the captured environment or real-time space which is otherwise recognized and otherwise matches the pre-stored environment or space as further shown in the user interface 604 of FIG. 6C. If the space is verified, the user is approved and logged in.

In some embodiments where the AR or VR verification is just a gating feature rather than the sole verification mechanism, the embodiments as illustrated in FIGs. 7A, 7B, and 7C further show that further verification steps may be required. In the case of user interface 700 of FIG. 7A, the app may further require the entry of a PIN. Once the correct PIN is entered, a notice as shown in user interface 702 of FIG. 7B shows a notice that the push is being approved and the user will be allowed to log in. Alternatively, the user interface 700 of FIG. 7A can pop up after AR or VR space verification to await a further passcode to be sent as part of a multi-step or multi-factor verification. Thus, the system would merely further send a passcode as illustrated by user interface 704 of FIG. 7C to enable the user to enter the code (e.g., sent via SMS) to enable the user to securely log in after both AR or VR verification and pushed passcode.

Although there are a number of various ways to implement the embodiments, there are generally two ways for this spatial verification to occur. In one instance, AR is used on the mobile device where the user authenticates pushes only using the space recognition or the user authenticates using biometrics (or other methods) first and then using the space recognition as an additional security measure. This technique can be used instead of location, for example, so that the user does not have to share any private information.

In another example, the user can use virtual reality or VR where the user can authenticate the push seamlessly using their environment. Alternatively, the user can first authenticate with optic biometrics for example, and then continue the process using their environment to ensure a smooth VR experience without the need for additional methods like PINS which can disrupt the immersive experience.

In some embodiments, with further reference to a method 800 as illustrated in FIG. 8, read and writes from a file in memory 802 can be analyzed by at least one processor 804 in a computing environment having one or more processors and memory operatively coupled to the one or more processors. The one or more processors 804 can perform a method for enhanced security using space recognition for push approvals on a client device, where the memory includes computer instructions which causes the one or more processors to perform certain operations.

In some embodiments, the operations include receiving at step 806 a push notification at the client device, capturing at step 808 a real-time environment and creating a spatial map using a camera in response to an acceptance of the push notification. At step 810, the method 800 can further compare the spatial map with a pre-stored image or space database. In some embodiments, the system can further include the optional step 812 of further authenticating using biometrics or user PIN credentials. At step 814, the system can prevent the push authentication when there is a lack of a match between the spatial map captured and the information from the pre-stored image or space database exists. The push authentication can proceed at step 816 when a match exists between the spatial map captured and the information from the pre-stored image or space database. Once the match is recognized by the system, the user is able to login at step 818.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

The proposed embodiments of AR/VR space push authentication cam take advantage of the trending technology of AR and VR and allow the authentication flow to seamlessly move towards the future. Users can utilize AR/VR and authenticate by simply showing their environment without necessarily requiring other methods of authentication. Administrators would be able to specify the approved locations, such as the office at the company or someone's verified home environment.

There are several advantages of adding spatial verification for push approvals including the reduction in fraud and spoofing. Through the requirement of a match between the real-time environment and the pre-stored spaces, the system mitigates the risk of fraud. It's hard to manipulate physical surroundings compared to digital credentials.

Spatial verification can also improve the user experience in VR by allowing the user to experience a seamless authentication, without having to input any passwords or other information. which disrupts the immersive experience. In other words, it is a quick and efficient push verification that does not interrupt the user's flow

Another advantage is the Application versatility. There are many use cases for the adoption of space verification including secure facilities and delivery verifications.

Further, the embodiments align with AR and VR trends. As AR and VR technologies become more prevalent, especially with devices like Vision Pro, this solution would be able to maintain and adapt to future trends.

In some embodiments, organizations or user can have customizable space repositories. Organizations have the option to maintain the image/space repository for the environments they want to verify so it's able to be relevant over time. It provides added flexibility for organizations that have changing policies or various policies with respect to the authorized work spaces where they will allow their employees to work. Many factors can be taken into account including, but not limited, to the remote working policies in place and the sensitivities of the work being handles and the level of trust given to certain individuals within an organization.

The embodiments can also easily integrate with artificial intelligence or Al. This solution can be integrated with Al algorithms in order to refine and enhance authentication accuracy. It would do so by learning from past verifications to continually improve over time and/or usage.

Overall, this AR/VR-based space verification provides a very future-ready approach to handling authentication, specifically push authentications. The AR push approval system can stream-line the push approval process, allowing them to be more efficient. Through the integration of AR, push approval using the environment around a user, it opens the way for AR or Virtual Reality integration, such as through Apple's VisionPro device. Such embodiments can take a leap forward in how to handle the approval workflow and provide a futuristic and engaging way in embracing new technologies.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A system (100, 200, 800) for enhanced security using space recognition for push approvals on a client device (102), comprising:
one or more processors (804) and memory (802) operatively coupled to the one or more processors, wherein the memory includes computer instructions which when executed by the one or more processors causes the one or more processors to perform the operations of:
capturing (808) a real-time environment and creating a spatial map using a camera coupled to the one or more processors;
comparing (810) the spatial map with a pre-stored device bound image database;
proceeding (816) with a push authentication based upon a match between the spatial map captured and information from the pre-stored device bound image database; and
preventing (814) the push authentication with a lack of a match between the spatial map captured and the information from the pre-stored device bound image database.

2. The system of claim 1, wherein the one or more processors further performs the operation of receiving (804) a push notification after initiating capturing the real-time environment and creating the spatial map.

3. The system of claim 1, wherein the real-time environment and the spatial map are created using an augmented reality (AR) session (212) or a virtual reality (VR) session.

4. The system of claim 1, wherein the real-time environment and the spatial map are created using an augmented reality (AR) session (212) that detects key features of specific images within a user environment using AR anchors and AR anchor-based tracking.

5. The system of claim 1, wherein the one or more processors are further configured to the pre-stored device bound image database or spatial maps representing pre-defined environments.

6. The system of claim 1, wherein the system comprises an authentication application installed on a client device where the authentication application receives a push notification and a user has an option to approve via space verification.

7. The system of claim 6, wherein the authentication application in response to receipt of a user approval of a push opens a camera view enabling the user to capture the real-time environment to verify information in the pre-stored device bound image database or spatial maps.

8. The system of claim 7, wherein once the real-time environment is verified, the user is approved for login (818) or the user continues an authentication flow specified by an application policy.

9. The system of claim 1, wherein the one or more processors further performs the operation of authenticating by using biometrics of a user or requesting a Personal Identity Number (PIN) of the user before using space recognition for push approvals.

10. A processor-implemented method for enhanced security using space recognition for push approvals on a client device (102), comprising:
receiving (806) a push notification at the client device;
in response to an acceptance of the push notification, capturing (808) a real-time environment and creating a spatial map using a camera coupled to the one or more processors;
comparing (810) the spatial map with a pre-stored device bound image database;
proceeding with a push authentication (816) based upon a match between the spatial map captured and information from the pre-stored device bound image database; and
preventing the push authentication (814) with a lack of a match between the spatial map captured and the information from the pre-stored device bound image database.

11. The processor-implemented method of claim 10, wherein the match between the spatial map and the pre-stored device bound image database enables a user for login (818).

12. The processor-implemented method of claim 10, wherein the real-time environment and the spatial map are created using an augmented reality (AR) session that detects key features of specific images within a user environment using AR anchors and AR anchor-based tracking that uses one or more of an anchor for a 2D surface that is detected in an AR space, an anchor for a 3D object that is detected in the AR space, and an anchor for a known image detected in the AR space.

13. The processor-implemented method of claim 10, wherein the method further comprises a coaching overlay (600) that guides a user in moving the client device during the step of capturing the real-time environment and creating the spatial map.

14. The processor-implemented method of claim 10, wherein the one or more processors further performs the operation of authenticating based on an application policy for a user before using space recognition for push approvals and wherein the application policy includes using biometrics or a PIN or both.

15. A non-transitory computer-readable medium encoded with instructions for causing a processing system to execute steps for enhanced security using space recognition for push approvals on a client device, comprising:
receiving a push notification at the client device (102);
in response to an acceptance of the push notification, capturing (808) a real-time environment and creating a spatial map using a camera coupled to the one or more processors;
comparing (810) the spatial map with a pre-stored device bound image database;
proceeding with a push authentication (816) based upon a match between the spatial map captured and information from the pre-stored device bound image database; and
preventing the push authentication (814) with a lack of a match between the spatial map captured and the information from the pre-stored device bound image database.
